# EUROPÄISCHE PATENTSCHRIFT

(11) **EP 3 220 107 B1**
(45) Veröffentlichungstag und Bekanntmachung des Hinweises auf die Patenterteilung: **14.04.2021**
(21) Anmeldenummer: 17159164.7
(22) Anmeldetag: 03.03.2017
(51) Int. Cl.: G01F 1/716, G01F 15/00, G01F 15/18, G01F 25/00

(54) **VERFAHREN ZUR AUSLEGUNG EINER MESSVORRICHTUNG UND VERFAHREN ZUM BETREIBEN EINER MESSVORRICHTUNG**
METHOD FOR DIMENSIONING A MEASURING DEVICE AND METHOD FOR OPERATING A MEASURING DEVICE
PROCÉDÉ DE DIMENSIONNEMENT D'UN DISPOSITIF DE MESURE ET PROCÉDÉ DE FONCTIONNEMENT D'UN DISPOSITIF DE MESURE

(30) Priorität: 15.03.2016 DE 102016104781
(43) Veröffentlichungstag der Anmeldung: 20.09.2017
(73) Patentinhaber: Krohne AG, 4019 Basel (CH)
(72) Erfinder: Hogendoorn, Cornelis Johannes, 4211 BG Spijk (NL)
(74) Vertreter: Gesthuysen Patentanwälte

(56) Entgegenhaltungen:
- DD-A1- 260 339
- DE-B- 1 176 886
- DE-U1- 29 514 088
- DE-U1-202013 009 509
- JP-A- H11 241 932
- US-A- 1 935 667
- US-A- 3 138 291
- US-A- 4 134 294
- US-A1- 2013 014 570
- Frivent: "Kondensatablauf", , 14 July 2012 (2012-07-14), XP055674700, Retrieved from the Internet: URL:http://www.frivent.com/userdata/4034/u ploads/pdf/FRIV_TIP_Kondensatablauf.pdf [retrieved on 2020-03-09]
- Anonymous: "Geruchsverschluss - Wikipedia", , 10 January 2016 (2016-01-10), XP055674701, Retrieved from the Internet: URL:https://de.wikipedia.org/w/index.php?t itle=Geruchsverschluss&oldid=150021885 [retrieved on 2020-03-09]

## Beschreibung

Die Erfindung betrifft zum einen ein Verfahren zur Auslegung einer Messvorrichtung mit einem Durchflussmessgerät, einem Einlaufrohr und einem Auslaufrohr, wobei das Durchflussmessgerät ein Messrohr aufweist und das Messrohr mit dem Einlaufrohr und dem Auslaufrohr verbunden ist. Darüber hinaus betrifft die Erfindung auch ein Verfahren zum Betreiben einer Messvorrichtung.

Ein Durchflussmessgerät mit einem Messrohr misst den Durchfluss eines Mediums durch das Messrohr. Bei dem Medium kann es sich entweder um ein einphasiges oder um ein mehrphasiges Medium handeln. Ein einphasiges Medium umfasst eine einzige Phase und ein mehrphasiges Medium umfasst mehrere Phasen. Darüber hinaus kann ein Medium auch noch feste Bestandteile umfassen. Der Durchfluss einer Phase durch ein Messrohr bezieht sich entweder auf einen Volumendurchfluss oder auf einen Massedurchfluss der Phase. Wenn ein Durchflussmessgerät unmittelbar einen Volumendurchfluss einer Phase eines Mediums misst, kann aus dem Volumendurchfluss unter Verwendung der Dichte der Phase der Massedurchfluss berechnet werden. Entsprechend kann, wenn ein Durchflussmessgerät unmittelbar einen Massedurchfluss einer Phase misst, aus dem Massedurchfluss unter Verwendung der Dichte der Phase der Volumendurchfluss der Phase bestimmt werden. Bei der Messvorrichtung sind sowohl das Einlaufrohr als auch das Auslaufrohr derart mit dem Messrohr verbunden, dass ein strömendes Medium zunächst durch das Einlaufrohr, dann durch das Messrohr und schließlich durch das Auslaufrohr strömt. Dabei strömt das Medium unmittelbar aus dem Einlaufrohr in das Messrohr und unmittelbar aus dem Messrohr in das Auslaufrohr.

Die Bestimmung des Durchflusses eines Mediums durch ein Messrohr erfordert die Kenntnis bestimmter Eigenschaften des Mediums. Weist das Medium zum Beispiel mehrere Phasen auf, müssen individualisierende Eigenschaften der einzelnen Phasen bekannt sein, welche die einzelnen Phasen für ein Durchflussmessgerät unterscheidbar machen, damit das Durchflussmessgerät die Anteile der einzelnen Phasen an dem Medium und die Durchflüsse der einzelnen Phasen bestimmen kann. Die Eigenschaften sind oftmals vom Druck und/oder der Temperatur des Mediums abhängig, weshalb diese Eigenschaften am Betriebsort eines Durchflussmessgeräts zu bestimmen sind und nicht an anderer Stelle während einer Kalibrierung bestimmt werden können. Die Bestimmung dieser Eigenschaften kann zum Beispiel durch Messungen eines Durchflussmessgeräts am im Messrohr stillstehenden Medium erfolgen. Das gilt insbesondere für die flüssigen Bestandteile des Mediums. Oftmals ist am Betriebsort eines Durchflussmessgeräts durch die Einbauposition des Durchflussmessgeräts jedoch nicht gewährleistet, dass, wenn das Medium nicht durch das Messrohr des Durchflussmessgeräts geströmt wird, insbesondere die flüssigen Bestandteile des Mediums im Messrohr verweilen, so dass das Durchflussmessgerät Messungen an dem im Messrohr stillstehenden Medium durchführen kann.

Die JP H11 241932 A spezifiziert ein Verfahren zur Auslegung einer Messvorrichtung mit einem Einlaufrohr, einem Auslaufrohr und einem dazwischen angeordneten Messrohr, welche zusammen einen Siphon bilden.

Eine Aufgabe der vorliegenden Erfindung ist daher die Angabe eines Verfahrens zur Auslegung einer Messvorrichtung, die Messungen eines Durchflussmessgeräts insbesondere an den flüssigen Bestandteilen eines Mediums im Messrohr unabhängig davon ermöglicht, ob das Medium strömt oder stillsteht, wobei das Messrohr bei stillstehendem Medium vollständig zumindest mit den flüssigen Bestandteilen des Mediums gefüllt ist.

Die Aufgabe ist zunächst und im Wesentlichen dadurch gelöst, dass das Einlaufrohr, das Messrohr und das Auslaufrohr einen Siphon bilden. Dabei ist der Siphon derart ausgebildet und derart in Bezug auf den Erdschwerefeldvektor ausgerichtet, dass, wenn zunächst ein Medium durch den Siphon strömt und dann das Strömen des Mediums aufhört, das Messrohr vollständig mit dem stillstehenden Medium gefüllt ist, und zwar zumindest mit den flüssigen Bestandteilen des Mediums. Das Strömen des Mediums hört dann im Siphon auf, wenn die Ursache für die Strömung im Siphon aufhört. Somit ermöglicht die erfindungsgemäße Messvorrichtung, dass das Durchflussmessgerät am im Messrohr stillstehenden Medium Messungen durchführen kann. Die Messungen erfolgen dabei für gewöhnlich bei der Temperatur und/oder beim Druck des Mediums am Betriebsort des Durchflussmessgeräts. Insbesondere der Umstand, dass Messungen für gewöhnlich bei der Temperatur des Mediums am Betriebsort vom Durchflussmessgerät durchgeführt werden, ist dadurch gewährleistet, dass die Messungen zeitlich unmittelbar nach dem Aufhören des Strömens des Mediums durch das Messrohr ausgeführt werden.

In einer Ausgestaltung der erfindungsgemäßen Messvorrichtung ist vorgesehen, dass das Durchflussmessgerät ein kernmagnetisches Durchflussmessgerät ist. Ein kernmagnetisches Durchflussmessgerät nutzt zur Analyse und insbesondere zur Durchflussmessung eines Mediums durch das Messrohr kernmagnetische Resonanzmessverfahren. Kernmagnetische Resonanzmessverfahren beeinflussen die Präzession von Atomkernen eines Mediums bei Anwesenheit eines makroskopischen Magnetfelds durch Anregung der Atomkerne mittels eines gesteuerten Magnetfelds und werten die Wirkung der Anregung auf die Atomkerne aus. Ein kernmagnetisches Durchflussmessgerät weist deshalb zur Erzeugung eines Magnetfelds in einem durch das Messrohr strömenden Medium eine Magnetisierungsvorrichtung und zur Anregung des Mediums im Messrohr und zur Messung der Wirkung der Anregung auf das Medium im Messrohr eine Messvorrichtung auf.

Die Atomkerne der Elemente, die einen Kernspin besitzen, besitzen auch ein durch den Kernspin hervorgerufenes magnetisches Moment. Der Kernspin kann als ein durch einen Vektor beschreibbarer Drehimpuls aufgefasst werden und entsprechend kann auch das magnetische Moment durch einen Vektor beschrieben werden, der parallel zum Vektor des Drehimpulses ist. Der Vektor des magnetischen Moments eines Atomkerns richtet sich bei Anwesenheit eines makroskopischen Magnetfelds wie dem durch die Magnetisierungsvorrichtung erzeugten parallel zum Vektor des makroskopischen Magnetfelds an der Stelle des Atomkerns aus. Dabei präzessiert der Vektor des magnetischen Moments des Atomkerns um den Vektor des makroskopischen Magnetfelds an der Stelle des Atomkerns. Die Frequenz der Präzession wird als Lamorfrequenz ω_{L} bezeichnet und ist proportional zum Betrag der Magnetfeldstärke B. Die Lamorfrequenz berechnet sich gemäß ω_{L} = γ • B. Darin ist γ das gyromagnetische Verhältnis, welches für Wasserstoffatomkerne maximal ist.

Voraussetzung für die Analyse und insbesondere für die Durchflussmessung eines Mediums durch ein kernmagnetisches Durchflussmessgerät unter Ausnutzung von kernmagnetischen Resonanzen ist, dass die zu analysierenden Phasen eines Mediums von dem kernmagnetischen Durchflussmessgerät zu unterscheidbaren kernmagnetischen Resonanzen angeregt werden können. Dafür ist die Kenntnis individualisierender Eigenschaften der einzelnen Phasen des Mediums erforderlich. Zu diesen zählen zum Beispiel die Spin-Spin- und die Spin-Gitter-Relaxationszeitkonstante. Diese Eigenschaften sind für gewöhnlich vom Druck und/oder der Temperatur des Mediums abhängig, weshalb die Eigenschaften am Betriebsort eines Durchflussmessgeräts zu bestimmen sind. Die Eigenschaften können zum Beispiel durch Messungen vom kernmagnetischen Durchflussmessgerät am im Messrohr stillstehenden Medium bestimmt werden.

Die Durchflussmessung kann die Strömungsgeschwindigkeiten der einzelnen Phasen des Mediums und die relativen Anteile der einzelnen Phasen am mehrphasigen Medium umfassen. Kernmagnetische Durchflussmessgeräte können zum Beispiel zur Analyse des aus Ölquellen geförderten mehrphasigen Mediums eingesetzt werden. Dieses Medium besteht im Wesentlichen aus den Phasen Erdöl, Erdgas und Salzwasser, wobei alle Phasen Wasserstoffatomkerne enthalten.

Grundsätzlich führt das Durchflussmessgerät Messungen am im Messrohr stillenstehenden Medium, unmittelbar nachdem das Strömen des Mediums aufgehört hat, durch. Das gewährleistet, dass die Messungen nicht dadurch beeinflusst sind, dass sich die einzelnen Phasen bei einem mehrphasigen Medium trennen und die Messungen beeinflussen. Um die Beeinflussung von Messungen durch eine Trennung der einzelnen Phasen des mehrphasigen Mediums zumindest zu vermindern, ist in einer weiteren Ausgestaltung der Messvorrichtung vorgesehen, dass das Messrohr gerade ist, eine Messrohrlängsachse aufweist und die Messrohrlängsachse senkrecht zum Erdschwerefeldvektor ausgerichtet ist. Bei dieser Ausgestaltung ist sichergestellt, dass sich die einzelnen Phasen nach der Trennung in Bezug auf den Erdschwerefeldvektor übereinander anordnen, so dass die Verteilung der einzelnen Phasen entlang der Messrohrlängsachse konstant ist, wodurch Messungen am Medium insbesondere durch kernmagnetische Durchflussmessgeräte in Bezug auf ein Messvolumen in seiner Gesamtheit nicht beeinflusst werden.

Gemäß der Erfindung ist vorgesehen, dass das Einlaufrohr und das Auslaufrohr jeweils ein erstes Rohrsegment mit einer ersten Rohrsegmentlängsachse, ein zweites Rohrsegment mit einer zweiten Rohrsegmentlängsachse und ein drittes Rohrsegment aufweisen. Dabei ist jeweils das erste Rohrsegment mit dem Messrohr verbunden, sind das erste Rohrsegment und das zweite Rohrsegment durch das dritte Rohrsegment miteinander verbunden und sind die erste Rohrsegmentlängsachse und die zweite Rohrsegmentlängsachse mit einem Rohrsegmentabstand beabstandet und parallel zueinander ausgerichtet. Der Rohrsegmentabstand ist dabei derart gewählt, dass bei einem stillstehenden Medium das Messrohr zumindest mit den flüssigen Bestandteilen des Mediums vollständig gefüllt ist.

Wenn ein Medium zunächst durch das Einlaufrohr, das Messrohr und das Auslaufrohr strömt und dann die Ursache für das Strömen des Mediums zumindest im Messrohr aufhört, so versucht das Medium aufgrund seiner Massenträgheit weiter zu strömen. Das kann dazu führen, dass das Medium auch aus dem Messrohr hinausströmt, so dass das Messrohr nicht mehr bei stillstehendem Medium vollständig gefüllt ist. Deshalb ist gemäß der Erfindung vorgesehen, dass der Rohrsegmentabstand derart unter Berücksichtigung einer angenommenen maximalen Strömungsgeschwindigkeit und angenommener Eigenschaften eines Mediums bestimmt ist, dass, wenn das Medium zunächst durch das Einlaufrohr, das Messrohr und das Auslaufrohr mit der angenommenen maximalen Strömungsgeschwindigkeit strömt und dann die Ursache für das Strömen des Mediums aufhört, das Messrohr vollständig mit dem stillstehenden Medium gefüllt ist. Bei einer der angenommenen Eigenschaften des Mediums handelt es sich zum Beispiel um die Dichte des Mediums. Aus der Dichte des Mediums und dem Volumen des Mediums in der Messvorrichtung kann zum Beispiel die Trägheit des strömenden Mediums bestimmt werden. Dabei ist es vorteilhaft, wenn zumindest das dritte Rohrsegment des Auslaufrohrs derart schräg angeordnet ist, dass es für das strömende Medium eine Rampe in entgegengesetzter Richtung zum Erdschwerefeldvektor bildet, so dass das Medium abgebremst wird.

Ferner kann vorgesehen sein, dass das Einlaufrohr und das Auslaufrohr jeweils ein erstes Rohrsegment, ein zweites Rohrsegment und ein drittes Rohrsegment aufweisen. Dabei ist das erste Rohrsegment mit dem Messrohr verbunden, sind das erste Rohrsegment und das zweite Rohrsegment durch das dritte Rohrsegment miteinander verbunden und weisen eine Projektion einer ersten Rohrinnenquerschnittsfläche des ersten Rohrsegments auf eine Projektionsebene und eine Projektion einer zweiten Rohrinnenquerschnittsfläche des zweiten Rohrsegments auf die Projektionsebene keine Schnittfläche in der Projektionsebene auf. Somit sind die Projektion der ersten Rohrinnenquerschnittsfläche und die Projektion der zweiten Rohrinnenquerschnittsfläche auf der Projektionsebene separat. Dadurch ist gewährleistet, dass ein Medium das Messrohr nach dem Aufhören der Ursache für die Strömung des Mediums auch vollständig füllt und nicht durch das Einlaufrohr oder das Auslaufrohr aus dem Messrohr abfließt.

In einer weiteren Ausgestaltung ist vorgesehen, dass sowohl im Einlaufrohr als auch im Auslaufrohr jeweils ein Ventil angeordnet ist oder das entweder im Einlaufrohr oder im Auslaufrohr ein Ventil angeordnet ist, um die Strömung eines Mediums durch das Messrohr zu steuern. Das Ventil bzw. die Ventile sind ausgebildet, das Strömen eines Mediums durch das Messrohr derart zu beeinflussen, dass das Medium durch das Messrohr strömt oder ein Strömen des Mediums im Messrohr aufhört. Das Ventil bzw. die Ventile sind somit die Ursache, wenn das Strömen des Mediums aufhört.

In einer Weiterbildung der vorangehenden Ausgestaltung der Messvorrichtung deren Einlaufrohr und Auslaufrohr jeweils ein erstes Rohrsegment, ein zweites Rohrsegment und ein drittes Rohrsegment aufweisen, wobei das erste Rohrsegment mit dem Messrohr verbunden ist und das erste Rohrsegment und das zweite Rohrsegment durch das dritte Rohrsegment miteinander verbunden sind, ist vorgesehen, dass das Ventil im Einlaufrohr und das Ventil im Auslaufrohr im jeweils dritten Rohrsegment angeordnet sind oder dass das Ventil im Einlaufrohr oder das Ventil im Auslaufrohr im entsprechenden dritten Rohrsegment angeordnet ist.

Gemäß einer weiteren Lehre betrifft die Erfindung auch ein Verfahren zum Betreiben einer erfindungsgemäßen Messvorrichtung. Das Verfahren weist die folgenden Verfahrensschritte auf:

In einem ersten Verfahrensschritt wird ein Medium durch das Einlaufrohr, das Messrohr und das Auslaufrohr geströmt und werden von dem Durchflussmessgerät Messungen an dem im Messrohr strömenden Medium durchgeführt. Wenn das strömende Medium ein mehrphasiges Medium ist, handelt es sich bei den Messungen zum Beispiel um Messungen zur Bestimmung der Anteile der einzelnen Phasen am mehrphasigen Medium und/oder um Messungen zur Bestimmung der Durchflüsse der einzelnen Phasen durch das Messrohr.

In einem zweiten Verfahrensschritt wird das Medium nicht durch das Einlaufrohr, das Messrohr und das Auslaufrohr geströmt und werden von dem Durchflussmessgerät an dem im Messrohr stillstehenden Medium Messungen durchgeführt. Bei diesen Messungen handelt es sich zum Beispiel um Messungen zur Bestimmung der genannten individualisierenden Eigenschaften der einzelnen Phasen des mehrphasigen Mediums, welche die einzelnen Phasen für das Durchflussmessgerät unterscheidbar machen, damit das Durchflussmessgerät die Anteile der einzelnen Phasen an dem Medium und die Durchflüsse der einzelnen Phasen bestimmen kann.

In einem dritten Verfahrensschritt wird die Genauigkeit der Messungen aus dem ersten Verfahrensschritt unter Verwendung der Messungen aus dem zweiten Verfahrensschritt gesteigert.

Im Einzelnen ist eine Vielzahl von Möglichkeiten gegeben, die erfindungsgemäßen Verfahren auszugestalten und weiterzubilden. Dazu wird verwiesen sowohl auf die Patentansprüche als auch auf die nachfolgende Beschreibunge eines bevorzugten Ausführungsbeispiels in Verbindung mit der Zeichnung. In der Zeichnung zeigt
- Fig. 1: ein Ausführungsbeispiel einer Messvorrichtung,
- Fig. 2: eine Schnittdarstellung der Messvorrichtung auf Fig. 1 mit einem strömenden Medium,
- Fig. 3: die Schnittdarstellung aus Fig. 2 mit einem stillstehenden Medium,
- Fig. 4: ein Einlauf- oder Auslaufrohr mit einer Projektion und
- Fig. 5: einen Ablaufplan eines Verfahrens.

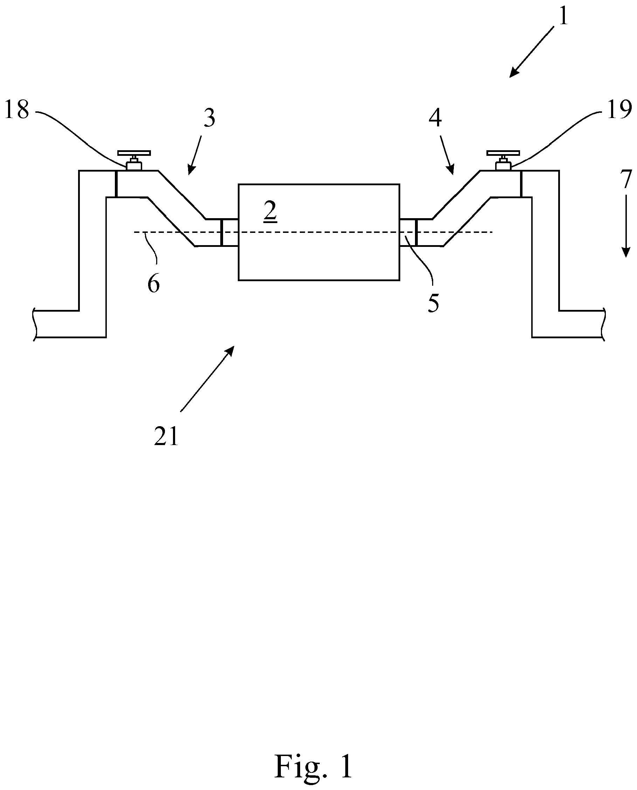

Fig. 1 zeigt die Messvorrichtung 1 mit dem Durchflussmessgerät 2, wobei es sich bei diesem in diesem Ausführungsbeispiel um ein kernmagnetisches Durchflussmessgerät handelt, dem Einlaufrohr 3 und dem Auslaufrohr 4. Das Durchflussmessgerät 2 weist das Messrohr 5 auf und das Messrohr 5 ist mit dem Einlaufrohr 3 und mit dem Auslaufrohr 4 verbunden. In diesem Ausführungsbeispiel ist das Messrohr 5 gerade und weist die Messrohrlängsachse 6 auf, wobei die Messrohrlängsachse 6 senkrecht zum Erdschwerefeldvektor 7 ausgerichtet ist.

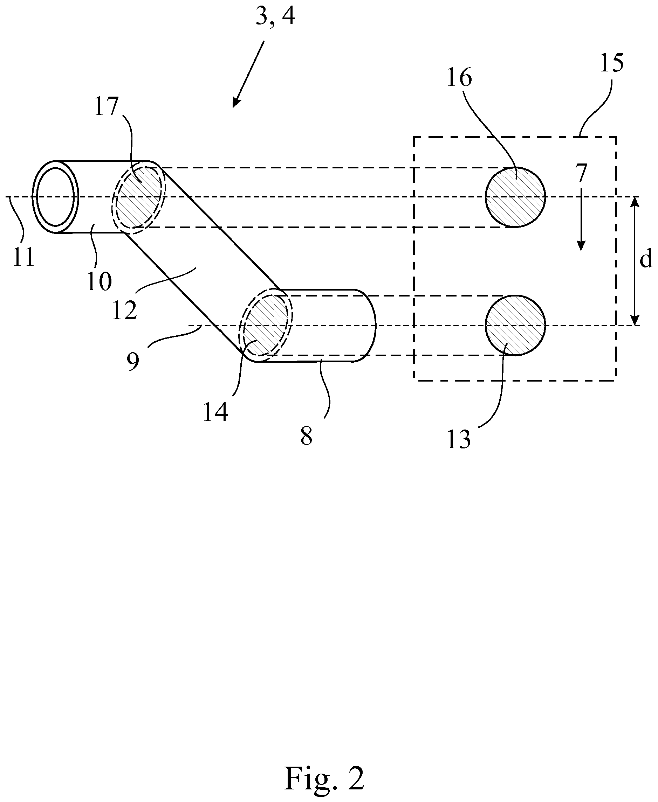

Das Einlaufrohr 3 und das Auslaufrohr 4 sind in diesem Ausführungsbeispiel identisch ausgebildet und in Fig. 2 dargestellt. Sie weisen jeweils ein erstes Rohrsegment 8 mit einer ersten Rohrsegmentlängsachse 9, ein zweites Rohrsegment 10 mit einer zweiten Rohrsegmentlängsachse 11 und ein drittes Rohrsegment 12 auf. Dabei ist jeweils das erste Rohrsegment 8 des Einlaufrohrs 3 und des Auslaufrohrs 4 mit dem Messrohr 5 verbunden, sind das erste Rohrsegment 8 und das zweite Rohrsegment 10 durch das dritte Rohrsegment 12 miteinander verbunden und sind die erste Rohrsegmentlängsachse 9 und die zweite Rohrsegmentlängsachse 11 mit einem Rohrsegmentabstand d entlang dem Erdschwerefeldvektor 7 beabstandet und parallel zueinander ausgerichtet. Darüber hinaus weisen in diesem Ausführungsbeispiel die Projektion 13 der ersten Rohrinnenquerschnittsfläche 14 des ersten Rohrsegments 8 auf die Projektionsebene 15 und die Projektion 16 der zweiten Rohrinnenquerschnittsfläche 17 des zweiten Rohrsegments 10 auf die Projektionsebene 15 keine Schnittfläche in der Projektionsebene 15 auf. Die Projektionsebene ist dabei entlang dem Erschwerefeldvektor 7 ausgerichtet.

In diesem Ausführungsbeispiel der Messvorrichtung 1 ist darüber hinaus im zweiten Rohrsegment 10 des Einlaufrohrs 3 das Ventil 18 und ist im zweiten Rohrsegment 10 des Auslaufrohrs 4 das Ventil 19 angeordnet.

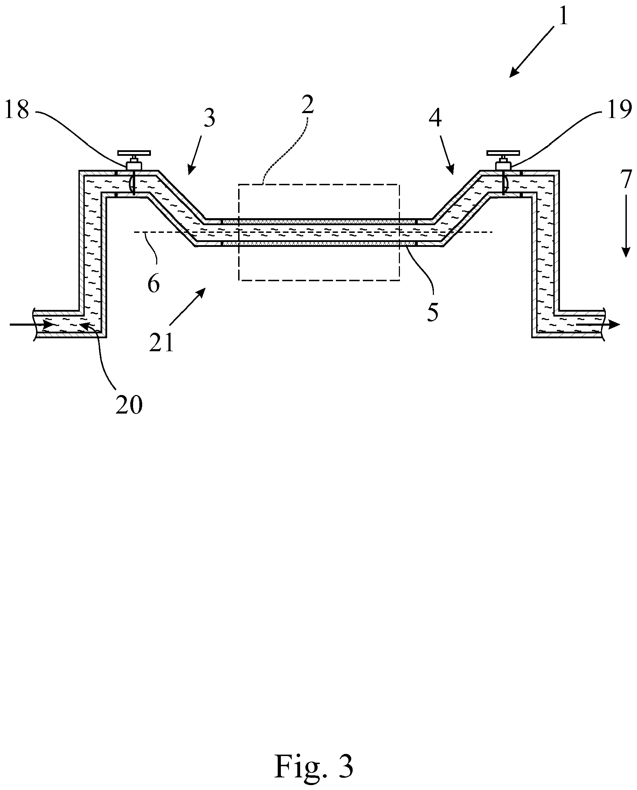

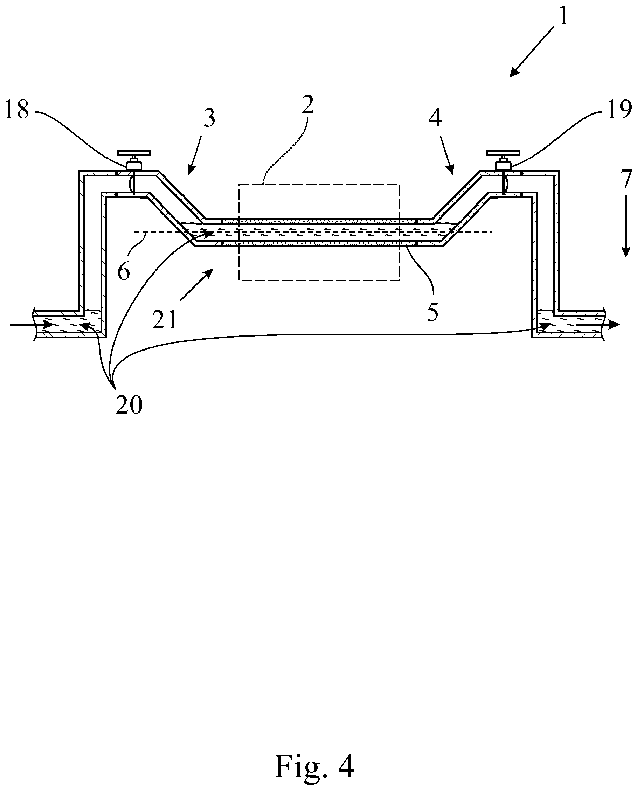

Die Fig. 3 und 4 sind Schnittdarstellungen der Messvorrichtung 1 und zeigen diese im Betrieb. In Fig. 3 strömt das Medium 20 zuerst durch das Einlaufrohr 3, dann durch das Messrohr 5 und schließlich durch das Auslaufrohr 4. Fig. 4 zeigt die Messeinrichtung 1, wenn das Strömen des Mediums 20 aufgehört hat. Unabhängig von dem Ausführungsbeispiel der Messvorrichtung 1 bilden das Einlaufrohr 3, das Messrohr 5 und das Auslaufrohr 4 den Siphon 21. Der Siphon 21 ist dabei derart ausgebildet und in Bezug auf den Erdschwerefeldvektor 7 ausgerichtet, dass, wenn zunächst das Medium 20 durch den Siphon 21 strömt und dann die Ursache für das Strömen des Mediums 20 aufhört, das Messrohr 5 vollständig mit dem stillstehenden Medium 20 gefüllt ist.

Der Rohrsegmentabstand d zwischen den ersten Rohrsegmentlängsachsen 9 und den zweiten Rohrsegmentlängsachsen 11 ist derart unter Berücksichtigung einer angenommenen maximalen Strömungsgeschwindigkeit mit angenommenen Eigenschaften des Mediums 20 bestimmt, dass, wenn das Medium 20 zunächst durch das Einlaufrohr 3, das Messrohr 5 und das Auslaufrohr 4 mit der angenommenen maximalen Strömungsgeschwindigkeit strömt und dann die Ursache für das Strömen des Mediums 20 aufhört, das Messrohr 5 vollständig mit dem stillstehenden Medium 20 gefüllt ist.

Zusätzlich sind das dritte Rohrsegment 12 des Einlaufrohrs 3 und das dritte Rohrsegment 12 des Auslaufrohrs 4 derart schräg in Bezug auf den Erdschwerefeldvektor 7 angeordnet, dass die Rohrsegmente 12 für das Medium 20 eine Rampe in entgegengesetzter Richtung zum Erdschwerefeldvektor 7 bildet, so dass das Medium 20 abgebremst wird.

Die Ventile 18, 19 steuern dabei das Strömen des Mediums 20 durch den Siphon 21. Wenn die Ventile 18, 19 geöffnet sind, strömt das Medium 20 durch das Messrohr 5 und geschlossene Ventile 18, 19 bewirken ein Aufhören der Ursache der Strömung im Messrohr.

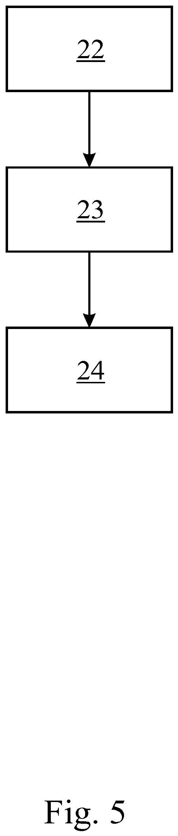

Die Messvorrichtung 1 führt im Betrieb das im Ablaufplan in Fig. 5 dargestellte Verfahren mit den folgenden Verfahrensschritten aus:

In dem ersten Verfahrensschritt 22 wird das Medium 20 durch das Einlaufrohr 3, das Messrohr 5 und das Auslaufrohr 4 geströmt und werden von dem Durchflussmessgerät 2 Messungen an dem im Messrohr 5 strömenden Medium 20 durchgeführt. Die Strömung des Mediums 20 wird dabei durch geöffnete Ventile 18, 19 eingestellt.

In dem zweiten Verfahrensschritt 23 wird das Medium 20 nicht durch das Einlaufrohr 3, das Messrohr 5 und das Auslaufrohr 4 geströmt und werden von dem Durchflussmessgerät 2 Messungen an dem im Messrohr 5 stillstehenden Medium 20 durchgeführt. Das Medium 20 wird nicht geströmt, indem sowohl das Ventil 18 als auch das Ventil 19 geschlossen sind.

In dem dritten Verfahrensschritt 24 wird die Genauigkeit der Messungen aus dem ersten Verfahrensschritt unter Verwendung der Messungen aus dem zweiten Verfahrensschritt gesteigert.

### Bezugszeichen

- 1: Messvorrichtung
- 2: Durchflussmessgerät
- 3: Einlaufrohr
- 4: Auslaufrohr
- 5: Messrohr
- 6: Messrohrlängsachse
- 7: Erdschwerefeldvektor
- 8: Erstes Rohrsegment
- 9: Erste Rohrsegmentlängsachse
- 10: Zweites Rohrsegment
- 11: Zweite Rohrsegmentlängsachse
- 12: Drittes Rohrsegment
- 13: Projektion der ersten Rohrinnenquerschnittsfläche
- 14: Erste Rohrinnenquerschnittsfläche
- 15: Projektionsebene
- 16: Projektion der zweiten Rohrinnenquerschnittsfläche
- 17: Zweite Rohrinnenquerschnittsfläche
- 18: Ventil
- 19: Ventil
- 20: Medium
- 21: Siphon
- 22: Erster Verfahrensschritt
- 23: Zweiter Verfahrensschritt
- 24: Dritter Verfahrensschritt
- d: Rohrsegmentabstand

## Patentansprüche

1. Verfahren zur Auslegung einer Messvorrichtung (1),
wobei die Messvorrichtung (1) ein Durchflussmessgerät (2), ein Einlaufrohr (3) und ein Auslaufrohr (4) aufweist,
wobei das Durchflussmessgerät (2) ein Messrohr (5) aufweist und das Messrohr (5) mit dem Einlaufrohr (3) und mit dem Auslaufrohr (4) verbunden ist, wobei das Einlaufrohr (3), das Messrohr (5) und das Auslaufrohr (4) einen Siphon (21) bilden,
wobei das Einlaufrohr (3) und das Auslaufrohr (4) jeweils ein erstes Rohrsegment (8) mit einer ersten Rohrsegmentlängsachse (9), ein zweites Rohrsegment (10) mit einer zweiten Rohrsegmentlängsachse (11) und ein drittes Rohrsegment (12) aufweisen, wobei das erste Rohrsegment (8) mit dem Messrohr (5) verbunden ist, das erste Rohrsegment (8) und das zweite Rohrsegment (10) durch das dritte Rohrsegment (12) miteinander verbunden sind und die erste Rohrsegmentlängsachse (9) und die zweite Rohrsegmentlängsachse (11) mit einem Rohrsegmentabstand (d) beabstandet und parallel zueinander sind,
**dadurch gekennzeichnet, dass** der Siphon (21) derart ausgebildet und in Bezug auf den Erdschwerefeldvektor (7) ausgerichtet ist, dass, wenn zunächst ein Medium (20) durch den Siphon (21) strömt und dann das Strömen des Mediums (20) aufhört, das Messrohr (5) vollständig mit dem stillstehenden Medium (20) gefüllt ist und wobei der Rohrsegmentabstand (d) derart unter Berücksichtigung einer angenommenen maximalen Strömungsgeschwindigkeit und angenommener Eigenschaften eines Mediums (20) bestimmt wird, dass, wenn das Medium (20) zunächst durch das Einlaufrohr (3), das Messrohr (5) und das Auslaufrohr (4) mit der angenommenen maximalen Strömungsgeschwindigkeit geströmt wird und dann die Ursache für das Strömen des Medium (20) aufhört, das Messrohr (5) vollständig mit dem stillstehenden Medium (20) gefüllt ist.

2. Verfahren zur Auslegung einer Messvorrichtung (1) nach Anspruch 1, **dadurch gekennzeichnet, dass** das Durchflussmessgerät (2) ein kernmagnetisches Durchflussmessgerät ist.

3. Verfahren zur Auslegung einer Messvorrichtung (1) nach Anspruch 1 oder 2, **dadurch gekennzeichnet, dass** das Messrohr (5) gerade ist, eine Messrohrlängsachse (6) aufweist und die Messrohrlängsachse (6) senkrecht zum Erdschwerefeldvektor (7) ausgerichtet ist.

4. Verfahren zur Auslegung einer Messvorrichtung (1) nach einem der Ansprüche 1 bis 3, **dadurch gekennzeichnet, dass** eine Projektion (13) einer ersten Rohrinnenquerschnittsfläche (14) des ersten Rohrsegments (8) auf eine Projektionsebene (15) und eine Projektion (16) einer zweiten Rohrinnenquerschnittsfläche (17) des zweiten Rohrsegments (10) auf die Projektionsebene (15) keine Schnittfläche in der Projektionsebene (15) aufweisen.

5. Verfahren zur Auslegung einer Messvorrichtung (1) nach einem der Ansprüche 1 bis 4, **dadurch gekennzeichnet, dass** im Einlaufrohr (3) und im Auslaufrohr (4) jeweils ein Ventil (18, 19) angeordnet ist oder dass im Einlaufrohr (3) oder im Auslaufrohr (4) ein Ventil (18, 19) angeordnet ist, um die Strömung eines Mediums (20) durch das Messrohr (5) zu steuern.

6. Verfahren zur Auslegung einer Messvorrichtung (1) nach Anspruch 5 und einem der Ansprüche 1 bis 4, **dadurch gekennzeichnet, dass** das Ventil (18) im Einlaufrohr (3) und das Ventil (19) im Auslaufrohr (4) im jeweiligen zweiten Rohrsegment (10) angeordnet sind oder dass das Ventil (18) im Einlaufrohr (3) oder das Ventil (19) im Auslaufrohr (4) im entsprechenden dritten Rohrsegment (12) angeordnet ist.

7. Verfahren zum Betreiben einer Messvorrichtung (1) mit einem Durchflussmessgerät (2), einem Einlaufrohr (3) und einem Auslaufrohr (4),
wobei das Durchflussmessgerät (2) ein Messrohr (5) aufweist und das Messrohr (5) mit dem Einlaufrohr (3) und mit dem Auslaufrohr (4) verbunden ist,
wobei das Einlaufrohr (3), das Messrohr (5) und das Auslaufrohr (4) einen Siphon (21) bilden, der Siphon (21) derart ausgebildet und in Bezug auf den Erdschwerefeldvektor (7) ausgerichtet ist, dass, wenn zunächst ein Medium (20) durch den Siphon (21) strömt und dann das Strömen des Mediums (20) aufhört, das Messrohr (5) vollständig mit dem stillstehenden Medium (20) gefüllt ist und
dadurch gegenzeichnet, dass das Verfahren die folgenden Verfahrensschritte aufweist:
In einem ersten Verfahrensschritt (22) wird das Medium (20) durch das Einlaufrohr (3), das Messrohr (5) und das Auslaufrohr (4) geströmt und werden von dem Durchflussmessgerät (2) Messungen an dem im Messrohr (5) strömenden Medium (20) durchgeführt,
in einem zweiten Verfahrensschritt (23) wird das Medium (20) nicht durch das Einlaufrohr (3), das Messrohr (5) und das Auslaufrohr (4) geströmt und werden von dem Durchflussmessgerät (2) an dem im Messrohr (5) stillstehenden Medium (20) Messungen durchgeführt und
in einem dritten Verfahrensschritt (24) wird die Genauigkeit der Messungen aus dem ersten Verfahrensschritt (22) unter Verwendung der Messungen aus dem zweiten Verfahrensschritt (23) gesteigert.

8. Verfahren nach Anspruch 7, wobei die Messvorrichtung (1) gemäß einem Verfahren nach einem der Ansprüche 1 bis 6 ausgelegt ist.

## Claims

1. Method for configuring a measuring device (1),
wherein the measuring device (1) comprises a flow measuring device (2), an inlet tube (3) and an outlet tube (4),
wherein the flow measuring device (2) comprises a measuring tube (5) and the measuring tube (5) is connected to the inlet tube (3) and to the outlet tube (4),
wherein the inlet tube (3), the measuring tube (5) and the outlet tube (4) form a siphon (21),
wherein the inlet tube (3) and the outlet tube (4) each have a first tube segment (8) with a first tube segment longitudinal axis (9), a second tube segment (10) with a second tube segment longitudinal axis (11), and a third tube segment (12), wherein the first tube segment (8) is connected to the measuring tube (5), the first tube segment (8) and the second tube segment (10) are connected to each other by the third tube segment (12), and the first tube segment longitudinal axis (9) and the second tube segment longitudinal axis (11) are spaced apart by a tube segment distance (d) and are parallel to each other,
**characterized in**
**that** the siphon (21) is formed and aligned with respect to the earth gravity field vector (7) in such a way that, when a medium (20) first flows through the siphon (21) and then the flow of the medium (20) stops, the measuring tube (5) is completely filled with the stationary medium (20), and
wherein the tube segment distance (d) is determined taking into account an assumed maximum flow velocity and assumed properties of a medium (20) in such a way that when the medium (20) first flows through the inlet tube (3), the measuring tube (5) and the outlet tube (4) at the assumed maximum flow velocity and then the cause of the flow of the medium (20) stops, the measuring tube (5) is completely filled with the stationary medium (20).

2. Method for configuring a measuring device (1) according to claim 1, **characterized in that** the flowmeter (2) is a nuclear magnetic flowmeter.

3. Method for configuring a measuring device (1) according to claim 1 or 2, **characterized in that** the measuring tube (5) is straight, has a measuring tube longitudinal axis (6) and the measuring tube longitudinal axis (6) is aligned perpendicularly to the earth gravity field vector (7).

4. Method for configuring a measuring device (1) according to any one of claims 1 to 3, **characterized in that** a projection (13) of a first tube inner cross-sectional surface (14) of the first tube segment (8) onto a projection plane (15) and a projection (16) of a second tube inner cross-sectional surface (17) of the second tube segment (10) onto the projection plane (15) do not have an intersection surface in the projection plane (15).

5. Method for configuring a measuring device (1) according to any one of claims 1 to 4, **characterized in that** a valve (18, 19) is arranged in the inlet tube (3) and in the outlet tube (4), respectively, or that a valve (18, 19) is arranged in the inlet tube (3) or in the outlet tube (4) in order to control the flow of a medium (20) through the measuring tube (5).

6. Method for configuring a measuring device (1) according to claim 5 and any one of claims 1 to 4, **characterized in that** the valve (18) in the inlet tube (3) and the valve (19) in the outlet tube (4) are arranged in the respective second tube segment (10) or that the valve (18) in the inlet tube (3) or the valve (19) in the outlet tube (4) is arranged in the corresponding third tube segment (12).

7. Method for operating a measuring device (1) with a flow meter (2), an inlet tube (3) and an outlet tube (4),
wherein the flow measuring device (2) comprises a measuring tube (5) and the measuring tube (5) is connected to the inlet tube (3) and to the outlet tube (4),
wherein the inlet tube (3), the measuring tube (5) and the outlet tube (4) form a siphon (21), the siphon (21) is formed and aligned with respect to the earth gravity field vector (7) in such a way that when a medium (20) first flows through the siphon (21) and then the flow of the medium (20) stops, the measuring tube (5) is completely filled with the stationary medium (20), and **characterized in**
**that** the method comprises the following method steps:
in a first method step (22), the medium (20) is made to flow through the inlet tube (3), the measuring tube (5) and the outlet tube (4), and measurements are carried out by the flowmeter (2) on the medium (20) flowing in the measuring tube (5),
in a second method step (23), the medium (20) does not flow through the inlet tube (3), the measuring tube (5) and the outlet tube (4), and measurements are carried out by the flowmeter (2) on the medium (20) which is stationary in the measuring tube (5), and
in a third method step (24), the accuracy of the measurements from the first method step (22) is increased using the measurements from the second method step (23).

8. Method according to claim 7, wherein the measuring device (1) is configured according to a method according to any one of claims 1 to 6.

## Revendications

1. Procédé de dimensionnement d'un dispositif de mesure (1),
dans lequel le dispositif de mesure (1) comprend un débitmètre (2), un tube d'entrée (3) et un tube de sortie (4),
dans lequel le débitmètre (2) comprend un tube de mesure (5) et le tube de mesure (5) est relié au tube d'entrée (3) et au tube de sortie (4),
dans lequel le tube d'entrée (3), le tube de mesure (5) et le tube de sortie (4) forment un siphon (21),
dans lequel le tube d'entrée (3) et le tube de sortie (4) comprennent respectivement un premier segment de tube (8) présentant un premier axe longitudinal de segment de tube (9), un deuxième segment de tube (10) présentant un deuxième axe longitudinal de segment de tube (11) et un troisième segment de tube (12), dans lequel le premier segment de tube (8) est relié au tube de mesure (5), le premier segment de tube (8) et le deuxième segment de tube (10) sont reliés l'un à l'autre au moyen du troisième segment de tube (12) et le premier axe longitudinal de segment de tube (9) et le deuxième axe longitudinal de segment de tube (11) sont parallèles à l'autre et espacés d'un écartement de segments de tube (d),
**caractérisé en ce que**
le siphon (21) est réalisé et orienté par rapport au vecteur du champ de pesanteur (7) de telle sorte que lorsque tout d'abord un milieu (20) s'écoule à travers le siphon (21) et qu'ensuite l'écoulement du milieu (20) cesse, le tube de mesure (5) est rempli complètement du milieu stagnant (20), et l'écartement de segments de tube (d) étant déterminé en tenant compte d'une vitesse d'écoulement maximale supposée et de propriétés supposées d'un milieu (20), de telle sorte que lorsque le milieu (20) est tout d'abord amené à s'écouler à travers le tube d'entrée (3), le tube de mesure (5) et le tube de sortie (4) à la vitesse d'écoulement maximale supposée puis que la cause de l'écoulement du milieu (20) cesse, le tube de mesure (5) est rempli complètement du milieu stagnant (20).

2. Procédé de dimensionnement d'un dispositif de mesure (1) selon la revendication 1, **caractérisé en ce que** le débitmètre (2) est un débitmètre à résonance magnétique nucléaire.

3. Procédé de dimensionnement d'un dispositif de mesure (1) selon la revendication 1 ou 2, **caractérisé en ce que** le tube de mesure (5) est rectiligne, présente un axe longitudinal de tube de mesure (6) et l'axe longitudinal de tube de mesure (6) est orienté perpendiculairement au vecteur du champ de pesanteur (7).

4. Procédé de dimensionnement d'un dispositif de mesure (1) selon l'une des revendications 1 à 3, **caractérisé en ce qu'**une projection (13) d'une première surface de section transversale intérieure de tube (14) du premier segment de tube (8) sur un plan de projection (15) et une projection (16) d'une deuxième surface de section transversale intérieure de tube (17) du deuxième segment de tube (10) sur le plan de projection (15) ne présentent aucune surface d'intersection dans le plan de projection (15).

5. Procédé de dimensionnement d'un dispositif de mesure (1) selon l'une des revendications 1 à 4, **caractérisé en ce qu'**une soupape (18, 19) est disposée respectivement dans le tube d'entrée (3) et dans le tube de sortie (4) ou **en ce qu'**une soupape (18, 19) est disposée dans le tube d'entrée (3) ou dans le tube de sortie (4), afin de réguler l'écoulement d'un milieu (20) à travers le tube de mesure (5).

6. Procédé de dimensionnement d'un dispositif de mesure (1) selon la revendication 5 et l'une des revendications 1 à 4, **caractérisé en ce que** la soupape (18) dans le tube d'entrée (3) et la soupape (19) dans le tube de sortie (4) sont disposées dans le deuxième segment de tube (10) respectif ou **en ce que** la soupape (18) dans le tube d'entrée (3) ou la soupape (19) dans le tube de sortie (4) est disposée dans le troisième segment de tube (12) correspondant.

7. Procédé de fonctionnement d'un dispositif de mesure (1) comportant un débitmètre (2), un tube d'entrée (3) et un tube de sortie (4),
dans lequel le débitmètre (2) comprend un tube de mesure (5) et le tube de mesure (5) est relié au tube d'entrée (3) et au tube de sortie (4),
dans lequel le tube d'entrée (3), le tube de mesure (5) et le tube de sortie (4) forment un siphon (21), le siphon (21) est réalisé et orienté par rapport au vecteur du champ de pesanteur (7) de telle sorte que lorsque tout d'abord un milieu (20) s'écoule à travers le siphon (21) et qu'ensuite l'écoulement du milieu (20) cesse, le tube de mesure (5) est rempli complètement du milieu stagnant (20), et
**caractérisé en ce que**
le procédé comprend les étapes de procédé suivantes :
dans une première étape de procédé (22), le milieu (20) est amené à s'écouler à travers le tube d'entrée (3), le tube de mesure (5) et le tube de sortie (4) et des mesures sur le milieu (20) s'écoulant dans le tube de mesure (5) sont effectuées par le débitmètre (2),
dans une deuxième étape de procédé (23), le milieu (20) n'est pas amené à s'écouler à travers le tube d'entrée (3), le tube de mesure (5) et le tube de sortie (4) et des mesures sur le milieu (20) stagnant dans le tube de mesure (5) sont effectuées par le débitmètre (2), et
dans une troisième étape de procédé (24), l'exactitude des mesures issues de la première étape de procédé (22) est accrue par utilisation des mesures issues de la deuxième étape de procédé (23).

8. Procédé selon la revendication 7, dans lequel le dispositif de mesure (1) est dimensionné conformément à un procédé selon l'une des revendications 1 à 6.
